# EUROPÄISCHE PATENTSCHRIFT

(11) **EP 0 531 831 B1**
(45) Veröffentlichungstag und Bekanntmachung des Hinweises auf die Patenterteilung: **07.06.1995**
(21) Anmeldenummer: 92114771.6
(22) Anmeldetag: 28.08.1992
(51) Int. Cl.: F16H 39/02, F04B 1/20

(54) **Axialkolbenmaschine für den Einbau in einen Getriebekasten**
Axial piston machine for installation in a gear case
Machine à pistons axiaux destinée à être montée dans un carter de boîte de vitesses

(30) Priorität: 11.09.1991 DE 4130225
(43) Veröffentlichungstag der Anmeldung: 17.03.1993
(73) Patentinhaber: Brueninghaus Hydromatik GmbH, 89012 Ulm (DE)
(72) Erfinder: Pecnik, Ivan, W-7270 Nagold (DE); Beck, Josef, W-7452 Haigerloch 2 (DE)
(74) Vertreter: Körber, Wolfhart, Dr.rer.nat.

(56) Entgegenhaltungen:
- DE-A- 2 633 718
- DE-A- 2 644 033
- FR-A- 2 145 265

## Beschreibung

Die Erfindung betrifft eine Axialkolbenmaschine nach dem Oberbegriff des Patentanspruchs 1, die für den Einbau in einen Getriebekasten vorgesehen ist.

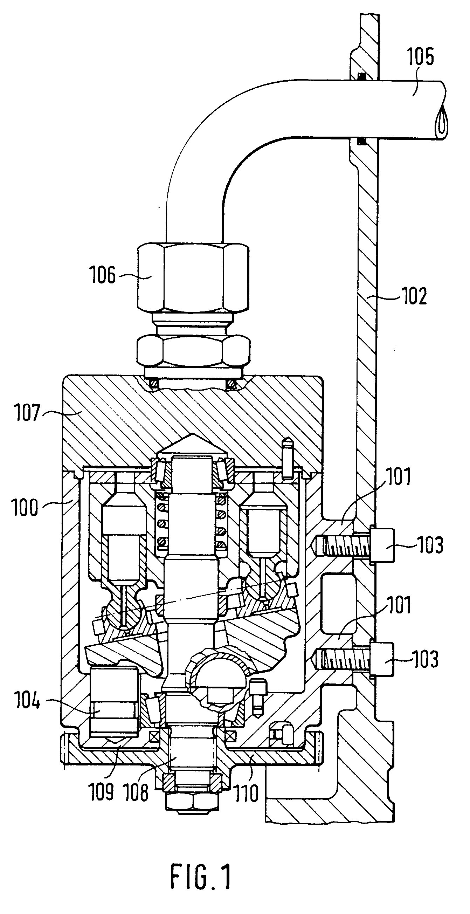

Eine derartige, aus der Praxis bekannte Axialkolbenmaschine mit verstellbarem Verdrängungsvolumen ist in Figur 1 dargestellt. Sie ist mit zwei an ihrem Maschinengehäuse 100 ausgebildeten Vorsprüngen 101 an der Innenseite einer vertikalen Getriebekasten-Wandung 102 mittels Schrauben 103 befestigt. Die Zu-und Ableitung von Druckmittel zum Druck- und Saugkanal (nicht dargestellt) sowie zu einer Verdrängungsvolumen-Verstelleinrichtung 104 erfolgt über Druckmittelleitungen 105 (lediglich eine derselben dargestellt), die durch Durchgangsbohrungen in der Getriebekasten-Wandung 102 hindurchgeführt und mittels Verschraubungen 106 am Anschlußblock 107 befestigt sind. Die Triebwelle 108 ragt mit ihren getriebeseitigen Ende aus der dem Anschlußblock 107 gegenüberliegenden Stirnwand 109 des Maschinengehäuses 100 heraus. Ein auf diesem herausragenden Ende befestigtes Zahnrad 110 stellt die Verbindung zwischen der Triebwelle 108 und einem im Getriebekasten angeordneten Getriebe her. Die Stirnwand 109 und damit das Zahnrad 110 befinden sich in größerer Nähe zu den Schraubbefestigungen den 103 als der Anschlußblock 107. Auf diese Weise wird, gemessen an den konstruktiven Gegebenheiten, eine optimale Einleitung der an der Triebwelle 108 angreifenden Antriebs- bzw. Abtriebskräfte in die Axialkolbenmaschine erreicht.

Es ist Aufgabe der Erfindung, eine Axialkolbenmaschine der eingangs genannten Art so weiterzubilden, daß ihre Betriebssicherheit im eingebauten Zustand erhöht ist und ihr Einbau sowie Ausbau leichter durchzuführen sind.

Diese Aufgabe wird erfindungsgemäß durch die kennzeichnenden Merkmale des Patentanspruchs 1 gelöst.

Infolge ihrer Befestigung am Getriebekasten-Deckel kann die erfindungsgemäße Axialkolbenmaschine durch Entfernen dieses Deckels vom Getriebekasten in einfachster Weise aus diesem ausgebaut werden. Der Einbau läßt sich in umgekehrter Weise ebenso leicht durchführen.

Die Befestigung über den Anschlußblock als massivsten, schwingungsärmsten Teil der Axialkolbenmaschine führt in Kombination mit der direkten Anlage des Anschlußblocks über seine Anschlußfläche an der Gegenfläche des Getriebekasten-Deckels zu höherer Betriebssicherheit, da sie im Vergleich zur Befestigung über Vorsprünge am Maschinengehäuse gemäß dein Stand der Technik schwingungsärmer und stabiler ist.

Infolge des letzteren Merkmals der direkten Anlage des Anschlußblocks am Getriebekasten-Deckel in Kombination mit der Ausmündung des Druck- und des Saugkanals in der Anschlußfläche sowie der als Anschlußkanäle im Getriebekasten-Deckel ausgebildeten Durchgangsöffnungen in der Gegenfläche werden der Saug- und der Druckkanal zugleich mit der Befestigung der Axialkolbenmaschine automatisch ohne Anschlußarbeiten über die Anschlußkanäle mit den an diese angeschlossenen Druckmittelleitungen verbunden. Dies bedeutet nicht nur schnellere und einfachere Montage und Demontage, sondern auch eine weitere Erhöhung der Betriebssicherheit der am Getriebekasten-Deckel befestigten Axialkolbenmaschine, da die im Stand der Technik erforderlichen Durchtrittsstellen der Druckmittelleitungen durch den Getriebekasten entfallen. Auf diese Weise werden Beschädigungen oder Brüche hervorrufende Scheuerungen der Druckmittelleitungen an den Durchtrittsstellen vermieden.

Aufgrund der Ausbildung der Anschlußfläche an der achsparallelen Umfangsfläche des Anschlußblocks bleibt dessen radiale Stirnfläche frei, so daß die Triebwelle durch den Anschlußblock hindurchgeführt werden kann, um mit ihrem getriebeseitigen Ende aus diesem herauszuragen. Da der Anschlußblock den massivsten Teil der Axialkolbenmaschine darstellt, ergibt sich aus dieser Anordnung eine gegenüber dem Stand der Technik erheblich verbesserte Einleitung der an der Triebwelle angreifenden Antriebs- bzw. Abthebskräfte in die Axialkolbenmaschine.

Zwar ist aus der DE-OS 26 33 718 eine Axialkolbenmaschine in Form einer Hydropumpe für den Einbau in einen Getriebekasten bekannt, wobei sie über einen Anschlußblock am Getriebekasten-Deckel befestigt ist. Jedoch ist diese bekannte Hydropumpe als Teil eines hydrostatischen Getriebes gemeinsam mit einem Verstellmotor in den Getriebekasten eingebaut. Beide Axialkolbenmaschinen sind über den am Getriebekasten-Deckel befestigten Anschlußblock miteinander verbunden und außerdem über ihre Maschinengehäuse am Getriebekasten-Deckel befestigt. In dem für beide Axialkolbenmaschinen gemeinsamen Anschlußblock sind die Verstelleinrichtung für den Verstellmotor sowie der Saug- und der Druckanschluß für die Hydropumpe angeordnet. Nicht gezeigte Druckmittelleitungen verbinden den Saug- und den Druckanschluß mit entsprechenden Anschlüssen des Verstellmotors. Die Triebwelle jeder Axialkolbenmaschine ragt aus der jeweiligen, dem gemeinsamen Anschlußblock gegenüberliegenden Gehäusestirnwand heraus.

Weitere Merkmale und Vorteile der Erfindung ergeben sich aus den Unteransprüchen.

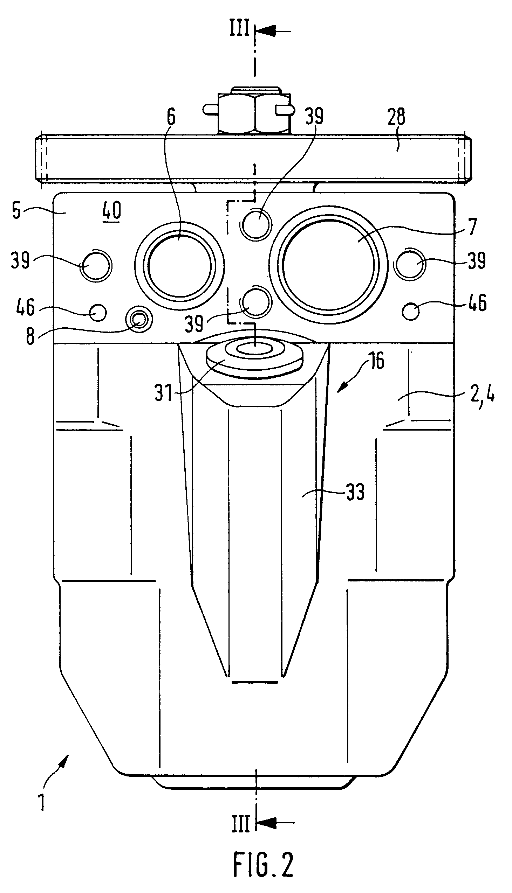

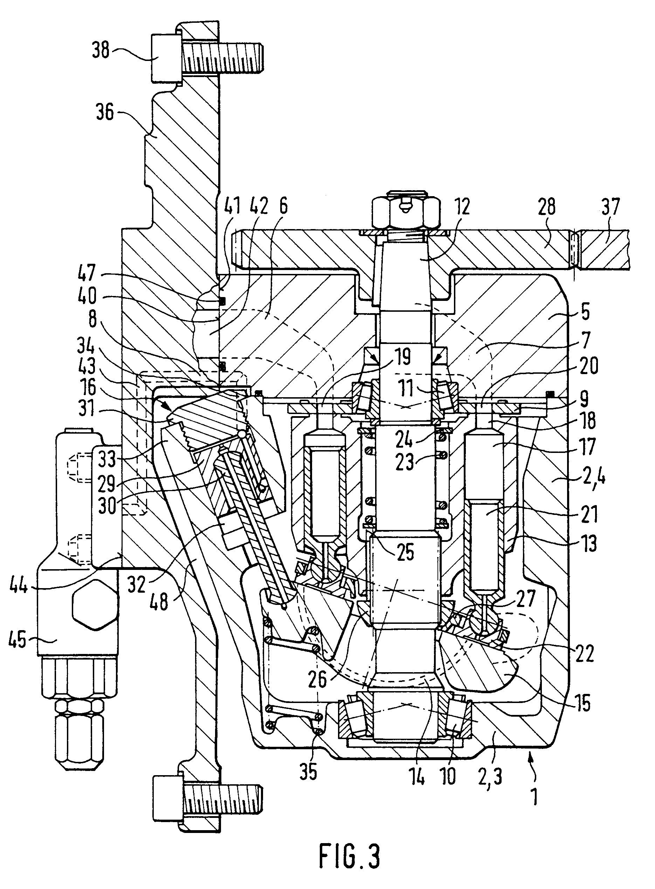

Nachstehend ist die Erfindung anhand eines bevorzugten Ausführungsbeispiels unter Bezugnahme auf die Figuren 2 und 3 näher beschrieben; Figur 1 zeigt eine aus dem Stand der Technik bekannte Axialkolbenmaschine gemäß dem Oberbegriff des Patentanspruchs 1.

Figur 2 zeigt eine Draufsicht der Axialkolbenmaschine gemäß dem bevorzugten Ausführungsbeispiel der Erfindung, und
Figur 3 die in erfindungsgemäßer Weise am Deckel eines Getriebekastens befestigte Axialkolbenmaschine nach Figur 1 im Schnitt entlang der Linie III-III in Figur 2.

Die in der Zeichnung dargestellte Axialkolbenmaschine ist als Verstellpumpe 1 in Schrägscheibenbauweise ausgebildet. Sie umfaßt in herkömmlicher Weise ein im wesentlichen zylindrisches und einseitig offenes Pumpengehäuse 2 mit einer Gehäuse-Stirnwand 3 und einer Gehäuse-Zylinderwand 4, einen das offene Ende des Pumpengehäuses 2 verschließenden Anschlußblock 5 mit einem Druckkanal 6, einem Saugkanal 7 und einem Steuerkanal 8, eine zwischen Pumpengehäuse 2 und Anschlußblock 5 angeordnete Steuerscheibe 9, ein mittels zweier Kegellager 10, 11 drehgelagertes Triebwerk mit einer Triebwelle 12 und einer auf dieser drehfest angeordneten Zylindertrommel 13, eine gegenüber dieser in Lagerschalen 14 an gegenüberliegenden Seiten der Gehäuse-Zylinderwand 4 schwenkbar gelagerte Schrägscheibe 15 und eine Verstelleinrichtung 16 zum Verstellen des Schwenkwinkels der Schrägscheibe 15.

In der Zylindertrommel 13 sind in bekannter Weise axial verlaufende und gleichmäßig verteilte Zylinderbohrungen 17 ausgebildet, die über Zylinderkanäle 18 an der der Steuerscheibe 9 zugewandten Steuerfläche der Zylindertrommel 13 ausmünden. In der Steuerscheibe 9 sind in bekannter Weise zwei diametral gegenüberliegende Steuernieren 19, 20 ausgebildet, die bei Drehung der Zylindertrommel 13 die Verbindung zwischen den Zylinderkanälen 18 und dem Druck- bzw. Saugkanal 6 bzw. 7 herstellen. In den Zylinderbohrungen 17 verschiebbar geführte Kolben 21 stützen sich mit ihren den Zylinderkanälen 18 gegenüberliegenden Kolbenenden über Gleitschuhe 22 an der Schrägscheibe 15 ab. Eine die Triebwelle 12 innerhalb einer Sackbohrung in der Zylindertrommel 13 umgebende Druckfeder 23 beaufschlagt einerseits die Zylindertrommel 13 über eine Ringscheibe 24 in Richtung Sternerscheibe 9 und hält andererseits die Gleitschuhe 22 über Druckstifte 25, einen Druckkopf 26 mit sphärischer Außenfläche und einen auf diesem gelagerten Druckring 27 in Anlage an die Schrägscheibe 15. Die Druckstifte 25 und der Druckkopf 26 sind drehfest auf der Triebwelle 12 angeordnet.

Die Triebwelle 12 ist mit einem Ende mittels des Kegellagers 10 in der Gehäuse-Stirnwand 3 gelagert, durchsetzt mit ausreichendem Spiel eine Durchgangsöffnung der Schrägscheibe 15 und ragt mit ihrem anderen, getriebeseitigen Ende aus einer entsprechenden Durchgangsbohrung im Anschlußblock 5 heraus. Das Kegellager 11 stützt die Triebwelle 12 am Anschlußblock 5 im Bereich der Steuerscheibe 9 ab. Auf dem getriebeseitigen Ende der Triebwelle 12 ist ein Zahnrad 28 lösbar befestigt.

Die Verstelleinrichtung 16 umfaßt einen Schieber 29, einen Stellbolzen 30 und eine Abschlußmutter 31. Der Schieber 29 ist in einer Durchgangsbohrung 32 in einem schräg zur Triebwelle 12 in Richtung Schrägscheibe 15 verlaufenden rippenartigen Vorsprung 33 der Gehäuse-Zylinderwand 4 ausgebildet. Der Schieber 29 ist in der Durchgangsbohrung 32 verschiebbar geführt. Der Stellbolzen 30 ist zwischen dem Schieber 29 und dem Rand der Schrägscheibe 15, mit beiden in formschlüssigem Eingriff stehend, angeordnet. Die Abschlußmutter 31 ist in die Durchgangsbohrung 32, diese nach außen verschließend, eingeschraubt. Der Steuerkanal 8 mündet über eine Kanalverlängerung 34 zwischen Schieber 29 und Abschlußmutter 31 aus. Die Schrägscheibe 15 ist durch eine an der Gehäuse-Stirnwand 3 abgestützte Schraubenfeder 35 in Anlage an den Stellbolzen 30 gehalten. Die Funktion der soweit herkömmlich ausgebildeten Verstellpumpe 1 ist bekannt und wird deshalb nicht beschrieben. Die Verstellpumpe 1 ist zum Einbau in einen durch einen Getriebekasten-Deckel 36 dargestellten und verschließbaren Getriebekasten vorgesehen, in dem ein durch ein Abthebszahnrad 37 dargestelltes mechanisches Getriebe eines Antriebs für z. B. einen Traktor angeordnet ist. Der Getriebekasten-Deckel 36 ist mit Hilfe von Schrauben 38 am Getriebekasten befestigbar.

Die Befestigung der Verstellpumpe 1 erfolgt an der Innenseite des Getriebekasten-Deckels 36, der zu diesem Zweck nicht gezeigte Durchgangsbohrungen zur Aufnahme von nicht dargestellten Befestigungsschrauben aufweist, die in Gewindebohrungen 39 im Anschlußblock 5 eingeschraubt sind. Die Gewindebohrungen 39 münden in einer ebenen Anschlußfläche 40 der axial verlaufenden Umfangsfläche des Anschlußblocks 5 und die Durchgangsbohrungen in einer entsprechenden Gegenfläche 41 an der Innenseite des Getriebekasten-Deckels 36 aus. In der Anschlußfläche 40 münden ferner der Druckkanal 6, der Saugkanal 7 und der Steuerkanal 8 der Verstellpumpe 1 sowie an der Gegenfläche 41 jeweils zugeordnete Anschlußkanäle 42 bzw. ein Steueranschlußkanal 43 aus, die sich durch den Getriebekasten-Deckel 36 hindurch erstrecken. Die Anschlußkanäle 42 sind für den Anschluß von entsprechenden, nicht gezeigten Druckmittelleitungen vorgesehen. Der Steueranschlußkanal 43 mündet an einer an der Außenseite des Getriebekasten-Deckels 36 ausgebildeten Befestigungsfläche 44 aus, an der ein Steuerventil 45 zur Steuerung der Druckmittelversorgung der Verstelleinrichtung 16 mittels einer nicht gezeigten Schraubbefestigung derart befestigbar ist, daß sein Druckmittelauslaß auf die Ausmündung des Steueranschlußkanals 43 ausgerichtet ist.

Die Kanäle 6, 7, 8 einerseits und die Anschlußkanäle 42 sowie der Steueranschlußkanal 43 andererseits sind jeweils so angeordnet, daß sie bei befestigter Verstellpumpe 1 genau aufeinander ausgerichtet sind. Gleichzeitig sind die Kanäle 6, 7, 8 und damit die Anschlußkanäle 42 und der Steueranschlußkanal 43 relativ zu den Schrauben 38 derart angeordnet, daß bei befestigter Verstellpumpe 1 das Zahnrad 28 mit dem Abtriebszahnrad 37 des mechanischen Getriebes kämmt. Eine Zentriereinrichtung 46 bestehend aus Zentrierstiften an der Gegenfläche 41 und entsprechenden Aufnahmebohrungen im Anschlußblock 5 erleichtern die Montage und die stellen die letztgenannte Anordnung sicher. Eine Dichtringanordnung 47 in einer entsprechenden Nut in der Anschlußfläche 40 verhindert den Austritt von Druckmittel zwischen der Gegenfläche 41 und der Anschlußfläche 40.

Der rippenartige Vorsprung 33 der Verstelleinrichtung 16 steht in radialer Richtung über die Anschlußfläche 40 über; er ist bei befestigter Verstellpumpe 1 in einer Aussparung 48 an der Innenseite des Getriebekasten-Deckels 36 aufgenommen.

Zur Montage am Getriebekasten-Deckel 36 wird die Verstellpumpe 1 mit der Anschlußfläche 40 des Anschlußblocks 5 an die Gegenfläche 41 des Getriebekasten-Deckels 36 so angesetzt, daß die Zentrierstifte der Zentriereinrichtung 46 in deren Aufnahmebohrungen eingreifen und auf diese Weise die Kanäle 6, 7, 8 im Anschlußblock 5 auf die Anschlußkanäle 42 und den Steueranschlußkanal 43 im Getriebekasten-Deckel 36 ausgerichtet sind. Gleiches gilt für die Durchgangsbohrungen im Getriebekasten-Deckel 36 und die Gewindebohrungen 39 im Anschlußblock 5, so daß die Befestigungsschrauben durch erstere hindurchgesteckt und in letztere eingeschraubt werden können, um auf diese Weise die Verstellpumpe 1 am Getriebekasten-Deckel 36 zu fixieren. In gleicher Weise erfolgt die Befestigung des Steuerventils 45 an der Befestigungsfläche 44 des Getriebekasten-Deckels 36. Letzterer kann nun gemeinsam mit dem Steuerventil 45 und der Verstellpumpe 1 auf den Getriebekasten aufgesetzt und an diesem mittels der Schrauben 38 befestigt werden, wobei der kämmende Eingriff des Zahnrades 28 in das Abtriebszahnrad 37 des mechanischen Getriebes von selbst erfolgt. Die Verstellpumpe 1 kann nun durch den Antrieb bzw. das mechanische Getriebe über das Zahnrad 28 angetrieben und von außen mittels des Steuerventils 45 hinsichtlich ihres Fördervolumens verstellt werden. Der Zugang zur Verstellpumpe 1 ist jederzeit möglich; zu diesen Zweck wird nach Lösen der Schrauben 38 der Getriebekasten-Deckel 36 vom Getriebekasten abgehoben. Die Verstellpumpe 1 kann nun, falls erforderlich, nach Lösen der Befestigungsschrauben vom Getriebekasten-Deckel 36 entfernt werden. Der Einbau der Verstellpumpe 1 erfolgt in umgekehrter Weise.

Die Erfindung ist nicht auf eine Hydropumpe beschränkt, sondern kann auch mit einem Hydromotor realisiert werden.

## Patentansprüche

1. Axialkolbenmaschine, insbesondere Hydropumpe oder Hydromotor, die lösbar in einem Getriebekasten eingebaut ist und ein einseitig offenes Maschinengehäuse (2), einen dieses verschließenden Anschlußblock (5), in dem ein Druck- und ein Saugkanal (6,7) für das Druckmittel verlaufen, und eine im Maschinengehäuse (2) und im Anschlußblock (5) drehgelagerte Triebwelle (12) aufweist, die zwecks Verbindung mit einem Getriebe aus der Axialkolbenmaschine herausragt, wobei der Getriebekasten durch einen Getriebekasten-Deckel (36) verschließbar ist und Durchgangsöffnungen für die Zu- und Ableitung des Druckmittels zum Druck- und zum Saugkanal (6,7) vorgesehen sind, **gekennzeichnet durch** die Kombination der folgenden Merkmale:
die Axialkolbenmaschine (1) ist nur mit ihrem Anschlußblock (5) am Getriebekasten-Deckel (36) befestigt und die Durchgangsöffnungen für die Zu-und Ableitung des Druckmittels sind als auf den Druck- und den Saugkanal (6, 7) im Anschlußblock (5) ausgerichtete Anschlußkanäle (42) im Getriebekasten-Deckel (36) ausgebildet,
der Anschlußblock (5) liegt mit einer Anschlußfläche (40) an einer Gegenfläche (41) des Getriebekasten-Deckels (36) abdichtend an,
die Anschlußfläche (40) ist an einer achsparallelen Umfangsfläche des Anschlußblocks (5) ausgebildet, und
die Triebwelle (12) ragt mit ihrem getriebeseitigen Ende aus dem Anschlußblock (5) heraus.

2. Axialkolbenmaschine nach Anspruch 1, **dadurch gekennzeichnet**, daß die Anschlußfläche (40) und die Gegenfläche (41) eine Zentriereinrichtung (46) in Form von Zentrierstiften und entsprechenden Aufnahmebohrungen aufweisen.

3. Axialkolbenmaschine nach Anspruch 1 oder 2, deren Verdrängungsvolumen mittels einer durch ein Druckmittel betätigbaren Verstelleinrichtung verstellbar ist und die einen Steuerkanal zur Zuführung des Druckmittels zur Verstelleinrichtung aufweist, **dadurch gekennzeichnet**, daß der Steuerkanal (8) in der Anschlußfläche (40) und ein zugeordneter im Getriebekasten-Deckel (36) ausgebildeter Steueranschlußkanal (43) in der Gegenfläche (41) ausmünden.

4. Axialkolbenmaschine nach Anspruch 3, mit einem Steuerventil zur Steuerung der Druckmittelversorgung der Verstelleinrichtung **dadurch gekennzeichnet**, daß der Getriebekasten-Deckel (36) an seiner Außenseite eine Befestigunsfläche (44) aufweist, in der der Steueranschlußkanal (43) ausmündet und an der die Befestigung des Steuerventils (45) vorgesehen ist.

5. Axialkolbenmaschine nach Anspruch 3 oder 4, deren Verstelleinrichtung in radialer Richtung über den Anschlußblock übersteht, **dadurch gekennzeichnet**, daß der Getriebekasten-Deckel (36) eine Aussparung (48) zur Aufnahme des überstehenden Teils (33) der Verstelleinrichtung (16) aufweist.

## Claims

1. Axial piston machine, in particular a hydraulic pump or a hydraulic motor, detachably installed in a gearbox, having a machine housing (2) open on one side, a connection block (5) closing this housing, in which block there extend a pressure channel and a suction channel (6, 7) for the pressure medium, and a drive shaft (12) rotatably mounted in the machine housing (2) and in the connection block (5), which drive shaft projects from the axial piston machine for the purpose of connection to a gear unit, the gearbox being closeable by means of a gearbox cover (36) and through apertures being provided for the supply and discharge of the pressure medium to the pressure channel and the suction channel(6, 7 ),
characterised by the combination of the following features:
the axial piston machine (1) is secured on the gearbox cover (36) only with its connection block (5) and the through apertures for supply and discharge of the pressure medium are formed as connection channels (42) in the gearbox cover (36) which are aligned with the pressure and suction channels (6, 7) in the connection block (5),
the connection block (5) bears with a contact surface (40) sealingly against an opposing surface (41) of the gearbox cover (36),
the contact surface (40) is formed on an axis parallel peripheral surface of the connection block (5), and
the drive shaft (12) projects from the connection block (5) with its end on the gear unit side.

2. Axial piston machine according to claim 1,
characterised in that,
the contact surface (40) and the opposing surface (41) have a centering arrangement (46) in the form of centering pins and corresponding receiving holes.

3. Axial piston machine according to claim 1 or 2, the displacement volume of which can be adjusted by means of a setting mechanism which can be actuated by a pressure medium, the axial piston machine having a control channel for supplying the pressure medium to the setting mechanism,
characterised in that,
the control channel (8) opens at the contact surface (40) and an associated control connecting channel (43), formed in the gearbox cover (36), opens at the opposing surface (41).

4. Axial piston machine according to claim 3, having a control valve for controlling the pressure medium supply of the setting mechanism,
characterised in that,
the gearbox cover (36) has on the outside an attachment surface (44) at which the control connecting channel (43) opens and on which the attachment of the control valve (45) is provided.

5. Axial piston machine according to claim 3 or 4, the setting mechanism of which projects beyond the connection block in the radial direction,
characterised in that,
the gearbox cover (36) has a recess (48) for receiving the projecting part (33) of the setting mechanism (16).

## Revendications

1. Machine à piston axial, en particulier pompe hydraulique ou moteur hydraulique, qui est montée de manière amovible dans une boîte d'engrenages et qui comporte un carter (2), ouvert d'un côté, un bloc de raccordement (5) fermant celui-ci, dans lequel s'étendent un canal de refoulement et un canal d'aspiration (6, 7) pour le fluide sous pression, ainsi qu'un arbre moteur (12) monté tournant dans le carter (2) et dans le bloc de raccordement (5), lequel arbre moteur ressort de la machine à piston axial, pour sa liaison avec une transmission, la boîte d'engrenages pouvant être fermée par un couvercle (36) et des ouvertures de passage étant prévues pour l'arrivée et le départ du fluide sous pression vers le canal de refoulement et le canal d'aspiration (6, 7), caractérisée par la combinaison des caractéristiques suivantes :
la machine à piston axial (1) n'est fixée que par son bloc de raccordement (5) sur le couvercle (36) de la boîte d'engrenages et les ouvertures de passage pour l'arrivée et le départ du fluide sous pression sont réalisées dans le couvercle (36) de la boîte d'engrenages sous la forme de canaux de raccordement (42), orientés vers le canal de pression et le canal d'aspiration (6, 7) dans le bloc de raccordement (5),
le bloc de raccordement (5) s'applique de manière étanche par une surface de raccordement (40) contre une contre-surface (41) du couvercle (36) de la boîte d'engrenages,
la surface de raccordement (40) est formée sur une surface périphérique, parallèle à l'axe, du bloc de raccordement (5), et
l'arbre moteur (12) ressort du bloc de raccordement (5), avec son extrémité côté transmission.

2. Machine à piston axial sel on la revendication 1, caractérisée en ce que la surface de raccordement (40) et la contre-surface (41) présentent un dispositif de centrage (46) sous la forme de doigts de centrage et de perçages de positionnement correspondants.

3. Machine à piston axial selon la revendication 1 ou 2 dont le volume de déplacement est réglable au moyen d'un dispositif de réglage, actionné par un fluide sous pression et qui comporte un canal de commande pour l'arrivée du fluide sous pression au dispositif de réglage, caractérisée en ce que le canal de commande (8) débouche dans la surface de raccordement (40) et un canal de raccordement de commande (43) associé, formé dans le couvercle (36) de la boîte d'engrenages, débouche dans la contre-surface (41).

4. Machine à piston axial selon la revendication 3 avec une soupape de commande pour la commande de l'alimentation du dispositif de réglage en fluide sous pression, caractérisée en ce que le couvercle (36) de la boîte d'engrenages présente, sur son côté extérieur, une surface de fixation (44) dans laquelle débouche le canal de raccordement de commande (40) et sur laquelle est prévue la fixation de la soupape de commande (45).

5. Machine à piston axial selon la revendication 3 ou 4 dont le dispositif de réglage dépasse radialement du bloc de raccordement, caractérisée en ce que le couvercle (36) de la boîte d'engrenages présente une découpe (48) destinée à recevoir la partie (33) saillante du dispositif de réglage (16).
